# EUROPEAN PATENT SPECIFICATION

(11) **EP 4 503 354 B1**
(45) Date of publication and mention of the grant of the patent: **18.02.2026**
(21) Application number: 23189362.9
(22) Date of filing: 03.08.2023
(51) Int. Cl.: H02B 11/04, H02B 11/12, H01R 13/193, H01R 13/11, H01H 71/08, H01R 13/18

(54) **CLAMPING DEVICE FOR A WITHDRAWABLE LOW-VOLTAGE CIRCUIT BREAKER UNIT**
SPANNVORRICHTUNG FÜR EIN ENTNEHMBARES NIEDERSPANNUNGS-LEISTUNGSSCHALTGERÄT
DISPOSITIF DE SERRAGE POUR UN DISJONCTEUR BASSE TENSION AMOVIBLE

(43) Date of publication of application: 05.02.2025
(73) Proprietor: ABB S.p.A., 20124 Milano (IT)
(72) Inventor: Rota Martir, Roberto, 24030 Brembate di Sopra (BG) (IT); Adami, Alessandro, 24123 Bergamo (IT)
(74) Representative: De Bortoli, Tiziano

(56) References cited:
- CN-B- 104 377 048
- CN-Y- 2 349 686
- DE-B- 1 095 915
- DE-B4- 102016 217 667

## Description

### FIELD OF THE INVENTION

The present invention generally falls within the technical field of low-voltage circuit breakers, particularly of withdrawable low-voltage circuit breakers. More in particular, the present invention relates to a slide-in clamping device for removably connecting a first electrical terminal of a withdrawable low-voltage circuit breaker to a corresponding second electrical terminal of a respective stationary base in a withdrawable low-voltage circuit breaker unit.

### PRIOR ART

Low-voltage circuit breakers are commonly used in low-voltage power distribution systems, for protecting electrical circuits and electrical equipment connected thereto from fault conditions, such as short-circuits, overloads, etc.

In particular, withdrawable low-voltage circuit breaker units have become very popular due to the possibility of replacement without having to re-wire them each time, thus reducing replacement time and costs.

A withdrawable low-voltage circuit breaker unit is essentially formed of two elements, namely a stationary base, which is fixed to a suitable support structure, for example a case or frame, and is permanently electrically connected to a corresponding electrical circuit, and a withdrawable part, the actual circuit breaker, which can be withdrawn from and re-installed onto the stationary base when required, for example for maintenance or replacement. The base comprises one or more stationary electrical terminals and the circuit breaker comprises one or more corresponding withdrawable electrical terminals. When the circuit breaker is mounted onto the respective base, the withdrawable electrical terminals of the circuit breaker and the stationary electrical terminals of the base are mechanically and electrically connected with each other.

For establishing such a mechanical and electrical connection, it is known in the art to use specific slide-in clamping devices having a first clamping seat for one or more of said stationary electrical terminals or, respectively, said withdrawable electrical terminals, at least partially laterally delimited by one or more pairs of first clamping fingers facing each other and comprising a respective slide-in opening, and a second clamping seat for corresponding one or more of said withdrawable electrical terminals or, respectively, said stationary electrical terminals, at least partially laterally delimited by one or more pairs of second clamping fingers facing each other and comprising a respective slide-in opening facing oppositely relative to the slide-in opening of the first clamping seat. The clamping seats are electrically connected to each other via the respective clamping fingers. Bias elastic means act on said pairs of first clamping fingers and second clamping fingers so as to urge the clamping fingers of each pair towards each other in a clamping direction perpendicular to the slide-in directions of the first clamping seat and the second clamping seat, thus maintaining the first clamping seat and the second clamping seat in a clamping condition. For maintaining the clamping fingers of the clamping seats at a predetermined distance from each other in this condition, a fixed spacer member is interposed between the clamping fingers or they are partially constrained in a mounting frame of the clamping device.

In use, one of the clamping seats of such slide-in clamping devices typically remains always clamped to one of the stationary electrical terminals of the stationary base or, respectively, one of the withdrawable electrical terminals of the withdrawable circuit breaker, whereas the other clamping seat is engaged or disengaged by a corresponding withdrawable electrical terminal of the withdrawable circuit breaker or, respectively, stationary electrical terminal of the stationary base each time the withdrawable circuit breaker has to be connected to or disconnected from its stationary base.

For ensuring a reliable and faultless operation of the withdrawable circuit breaker unit it is necessary for the clamping fingers of each clamping seat of the slide-in clamping device to adhere very tightly to the respective electrical terminal, which results in very high forces required for inserting the electrical terminals into the respective clamping seats of said slide-in clamping device.

Especially for larger-size withdrawable low-voltage circuit breaker units, such high forces are usually generated with the aid of special manual or motorized mechanisms provided in the circuit breaker unit, which mechanisms shall therefore be correspondingly dimensioned for generating the required insertion force. Alternatively, or additionally, it is known to provide the clamping fingers of the slide-in clamping devices with particular shapes for making insertion of the electrical terminals easier. Both solutions, however, negatively affect known withdrawable low-voltage circuit breaker units and/or corresponding known slide-in clamping devices in terms of manufacture complexity and costs.

Another drawback resulting from the high forces required for inserting electrical terminals into clamping seats of respective slide-in clamping devices in known withdrawable low-voltage circuit breaker units is the wear so caused to the clamping fingers of the clamping device, which are often made of a relatively soft metal such as copper, and possibly also to the electrical terminals of the withdrawable circuit breaker unit. With time, this worsens the mechanical and electrical contact between clamping fingers and electrical terminals, possibly impairing operation of the withdrawable circuit breaker unit. Moreover, high insertion forces indirectly cause higher stress and wear also to other elements of the withdrawable circuit breaker unit, particularly the moving parts of the insertion mechanism, which negatively affects the operation and service life of the same unit as well.

Examples of known clamping devices are shown in DE1095915B, CN104377048B, DE102016217667B4 and CN2349686Y.

### SUMMARY OF THE INVENTON

In view of the above, it is an object of the present invention to provide a slide-in clamping device for mechanically and electrically connecting electrical terminals of a withdrawable low-voltage breaker unit which allows the force for inserting such electrical terminals into respective clamping seats of the slide-in clamping device to be reduced, while still ensuring a secure and tight connection between clamping fingers of the clamping seats and electrical terminals when the electrical terminals are fully inserted in the respective clamping seats. Another object of the present invention is to provide a slide-in clamping device as mentioned above which has a simple construction and can be manufactured at low costs.

Still another object of the present invention is to provide a slide-in clamping device as mentioned above, whose main features can be easily implemented also in existing slide-in clamping devices.

According to the invention, these objects and other advantages which will become more apparent form the following description are achieved by a slide-in clamping device for removably connecting a first electrical terminal of a withdrawable low-voltage circuit breaker to a second electrical terminal of a respective stationary base in a withdrawable low-voltage circuit breaker unit, the clamping device comprising:
- at least one pair of first clamping fingers facing each other and at least partially laterally delimiting a first clamping seat for one of said first and second electrical terminals, the first clamping seat comprising a respective slide-in opening;
- at least one pair of second clamping fingers facing each other and at least partially laterally delimiting a second clamping seat for the other of said first and second electrical terminals, the second clamping seat comprising a respective slide-in opening facing oppositely relative to the slide-in opening of the first clamping seat, and
- bias elastic means acting on said at least one pair of first clamping fingers and said at least one pair of second clamping fingers so as to urge the clamping fingers of each pair towards each other in a clamping direction substantially perpendicular to respective slide-in directions of said first clamping seat and said second clamping seat.

The slide-in clamping device of the invention further comprises at least one displaceable spacer assembly having a displaceable spacer member, wherein the displaceable spacer member is displaceable between an active position, in which the displaceable spacer member contacts the first clamping fingers of the at least one pair of first clamping fingers or the second clamping fingers of the at least one pair of second clamping fingers urging them away from each other in the clamping direction, and an inactive position, in which the displaceable spacer member does not apply any significant force to said first clamping fingers or said second clamping fingers.

Advantageously, the invention proposes to use a displaceable spacer assembly having a displaceable spacer member to selectively apply a force to the clamping fingers of a respective clamping seat which counteracts the clamping force generated by the bias elastic means of the clamping device acting on the same clamping fingers. When the displaceable spacer member is in its active position, it spreads the clamping fingers apart from each other to a certain predetermined extent as compared to their position under the sole action of the bias elastic means and without electrical terminal inserted in the corresponding clamping seat. This facilitates the insertion of an electrical terminal into the clamping seat, thus reducing the insertion force required for this purpose and also the friction wear of the clamping fingers and of the electrical terminals resulting from this operation. When instead the displaceable spacer member is in its inactive position, it does not act on the clamping fingers, so that they can fully develop their clamping action under the action of the bias elastic means, ensuring a secure and tight clamping connection between clamping seat and electrical terminal inserted therein.

As it will become more apparent also from the following description, a displaceable spacer assembly capable of operating as described above may be designed so as to have a simple and robust configuration, involving a minimum number of parts, which allows the slide-in clamping device of the invention to be manufactured easily and at low costs. Moreover, such a displaceable spacer assembly can also be easily designed to fit into known slide-in clamping devices for withdrawable low-voltage circuit breaker units, therefore the present invention is also useful for retrofitting conventional clamping devices already available on the market.

Preferably, the at least one displaceable spacer assembly comprises displaceable spacer assembly bias elastic means urging the displaceable spacer member towards its active position. By means of such bias elastic means it is advantageously possible not only to autonomously keep the displaceable spacer member in the above-mentioned active position, so as to apply the desired spreading force onto the clamping fingers when no electrical terminal is inserted into the clamping seat, but also to autonomously bring the displaceable spacer member from the inactive position back into the active position when an electrical terminal is withdrawn from the clamping seat. By properly dimensioning the displaceable spacer assembly bias elastic means in relation to the clamping device bias elastic means, which are responsible for the clamping action of the clamping fingers of each clamping seat, it is possible to selectively set a predetermined spreading degree for the clamping fingers and thus the extent to which the force for inserting an electrical terminal into the corresponding clamping seat is reduced.

Preferably, the at least one displaceable spacer assembly is fully received, preferably removably, in the first or the second clamping seat of the clamping device.

Preferably, when the displaceable spacer member is in the active position, i.e., no electrical terminal is inserted in the corresponding clamping seat, the displaceable spacer member is retained within the clamping seat only by means of the respective clamping fingers. Preferably, the displaceable spacer member is displaceable along the slide-in direction of the first clamping seat or the second clamping seat.

Preferably, the displaceable spacer member is displaceable by the first electrical terminal or the second electrical terminal upon insertion thereof in the respective clamping seat. Preferably, when the first electrical terminal or the second electrical terminal is fully inserted in the respective clamping seat, the displaceable spacer member is in its inactive position. Preferably, when the first electrical terminal or the second electrical terminal is fully withdrawn from the respective clamping seat, the displaceable spacer member is in its active position.

Each of these features, alone or in combination with one another, advantageously contributes to a simple, effective, and robust operation of the displaceable spacer assembly in the slide-in clamping device of the invention, which positively affects the ease of use and reliability of the clamping device itself.

Preferably, the displaceable spacer member of the displaceable spacer assembly is configured as a plate.

Preferably, the displaceable spacer assembly bias elastic means comprise one or more cantilever springs, one or more compression coil springs, or combinations thereof. Advantageously, the resulting displaceable spacer assembly has a simple and robust structure, which nevertheless can be easily adapted to fit into clamping device of different forms and sizes.

Preferably, the displaceable spacer assembly bias elastic means are attached to the displaceable spacer member. Advantageously, the displaceable spacer assembly thus forms a single-piece component, which can be more easily manipulated inside and outside the clamping device and mounted/removed into/form the same.

Advantageously, when the displaceable spacer member is configured as a plate and the displaceable spacer assembly bias elastic means are or comprise at least one cantilever spring, the latter can be integrally formed with the displaceable spacer member.

Preferably, the first clamping fingers and the second clamping fingers comprise respective inner contact protrusions projecting inwardly in the first clamping seat or the second clamping seat, respectively. Such inner contact protrusions properly define the contact area between the clamping fingers and the electrical terminal inserted into the corresponding clamping seat, and at the same time may also advantageously function as retainers for the displaceable spacer member so that it does not slip out from the respective clamping seat under the action of the displaceable spacer assembly bias elastic means when the clamping seat is in a rest condition, i.e., no electrical terminal is inserted therein and the displaceable spacer member is in its active position.

Preferably, the slide-in directions of the first clamping seat and of the second clamping seat substantially coincide with each other.

Preferably, the clamping device of the invention comprises at least one pair of integrally formed clamping members facing each other and at least partially laterally delimiting both the first clamping seat and the second clamping seat, the first clamping fingers of the at least one pair of first clamping fingers being defined by first longitudinal end portions of said clamping members, and the second clamping fingers of said at least one pair of second clamping fingers being defined by second longitudinal end portions of said clamping members. This design advantageously simplifies the manufacturing and assembly of the clamping device and, at the same time, allows particularly effective ways of functioning thereof to be implemented.

Preferably, the clamping device further comprises a fixed spacer member interposed between the clamping members of said at least one pair of clamping members for maintaining them at a predetermined distance from each other against the action of the bias elastic means of the clamping device.

According to a preferred embodiment, the clamping device comprises a plurality of pairs of said clamping members arranged in two rows facing each other and extending parallel to a longitudinal midplane of the clamping device containing the slide-in directions of the first clamping seat and the second clamping seat. More preferably, the two rows of clamping members are symmetrically located relative to said longitudinal midplane. This configuration of the clamping device, also known in the art as "jaw" configuration, is particularly suitable for connecting bar-like electrical terminals, such as for example busbars, having a square or rectangular cross section.

In this embodiment, the bias elastic means preferably comprise a pair of leaf springs each acting on one of said rows of clamping members at respective longitudinal end portions thereof. Conveniently, each leaf spring may be formed as a single piece comprising two opposite contact portions, for contacting the respective row of clamping members at their longitudinal end portions, and a central connecting portion which connects the two contact portions. Each contact portion has a comb-like structure comprising a plurality of prongs corresponding to the plurality of pairs of clamping members. In this way, the bias elastic means can apply the biasing force to each clamping finger individually.

According to another preferred embodiment, the clamping device comprises at least one pair of clamping members circumferentially arranged about a longitudinal axis defined by the slide-in directions of said first clamping seat and said second clamping seat. This configuration, also known in the art as "tulip" configuration, of the clamping device is particularly suitable for connecting finger-like electrical terminals having a round cross section

In this embodiment, the bias elastic means preferably comprise a pair of compression rings circumferentially surrounding the at least one pair of clamping members at the longitudinal end portions thereof. Each compression ring may be formed, for example, by one or more annular traction coil springs, or by a ring made of a resilient material.

Preferably, in this embodiment the at least one pair of clamping members are arranged in the clamping device without the aid of a mounting frame.

When the clamping device comprises a fixed spacer member, the displaceable spacer assembly bias elastic means, at a side thereof opposite to the displaceable spacer member, preferably abut against the fixed spacer member.

When instead the clamping device does not comprise a fixed spacer member, or the fixed spacer member does not allow an abutment, the displaceable spacer assembly bias elastic means, at a side thereof opposite to the displaceable spacer member, may conveniently abut against one of said first and second electrical terminals received in the clamping seat other than the one where the displaceable spacer assembly acts.

The objects of the invention are also achieved by a withdrawable low-voltage circuit breaker unit, comprising a withdrawable low-voltage circuit breaker having at least one first electrical terminal, a stationary base having at least one corresponding second electrical terminal, and a slide-in clamping device according to any one of the previous claims which removably connects said first and second electrical terminals to each other.

### LIST OF THE FIGURES

Further features and advantages of the invention shall become more apparent form the following detailed description of some preferred, although not exclusive, embodiments thereof, illustrated herein for indicating and non-limiting purposes with the aid of the attached drawings, wherein:
- Fig. 1 is a schematic perspective view of a first preferred embodiment of a slide-in clamping device according to the invention for a withdrawable low-voltage circuit breaker unit;
- Fig. 2 is a schematic perspective exploded view of the clamping device of Fig. 1;
- Fig. 3 is a schematic perspective view of the displaceable spacer assembly of the clamping device of Fig. 1;
- Fig. 4 is a schematic perspective view showing another embodiment of a displaceable spacer assembly which can be used in the clamping device of Fig. 1;
- Fig. 5a is a schematic cross-sectional view of the clamping device of Fig. 1 taken along the line V-V in Fig. 1 further showing two corresponding electrical terminals of a withdrawable low-voltage circuit breaker unit, one of which is inserted in one of the clamping seats of the clamping device;
- Fig. 5b is a schematic cross-sectional view corresponding to Fig. 5a, with both electrical terminals inserted in the clamping seats of the clamping device;
- Figs. 6a-b are schematic side views showing configurations similar to those of Figs. 5a-b, respectively, wherein the clamping device comprises still another embodiment of a displaceable spacer assembly;
- Fig. 7 is a schematic perspective view of a second preferred embodiment of a slide-in clamping device according to the invention for a withdrawable low-voltage circuit breaker unit;
- Fig. 8 is a schematic perspective exploded view of the clamping device of Fig. 7;
- Fig. 9a is a schematic longitudinal sectional view of the clamping device of Fig. 8 taken along the line IX-IX in Fig. 7 further showing two electrical terminals of a withdrawable low-voltage circuit breaker unit, one of which is inserted in one of the clamping seats of the clamping device;
- Fig. 9b is a schematic longitudinal sectional view corresponding to Fig. 9a, with both electrical terminals inserted in the clamping seats of the clamping device;
- Fig. 10 is a diagram qualitatively showing the behavior of the insertion force as a function of the insertion position during the insertion of an electrical terminal into a clamping seat of the slide-in clamping device of Fig. 1 with (curve A) and without (curve B) the aid of a displaceable spacer assembly according the invention, and
- Figs. 11a-b are schematic exploded views of a withdrawable low-voltage circuit breaker unit comprising slide-in clamping devices according to the invention, wherein the slide-in clamping devices are associated with the electrical terminals of the stationary base or, respectively, with the electrical terminals of the withdrawable circuit breaker.

### DETAILED DESCRIPTION

With reference to the above-listed figures, the present invention relates to a slide-in clamping device for withdrawable low-voltage circuit breaker units.

For the purposes of the present invention, by the term "low-voltage" it is meant an electrical voltage lower than or equal to about 2500 V.

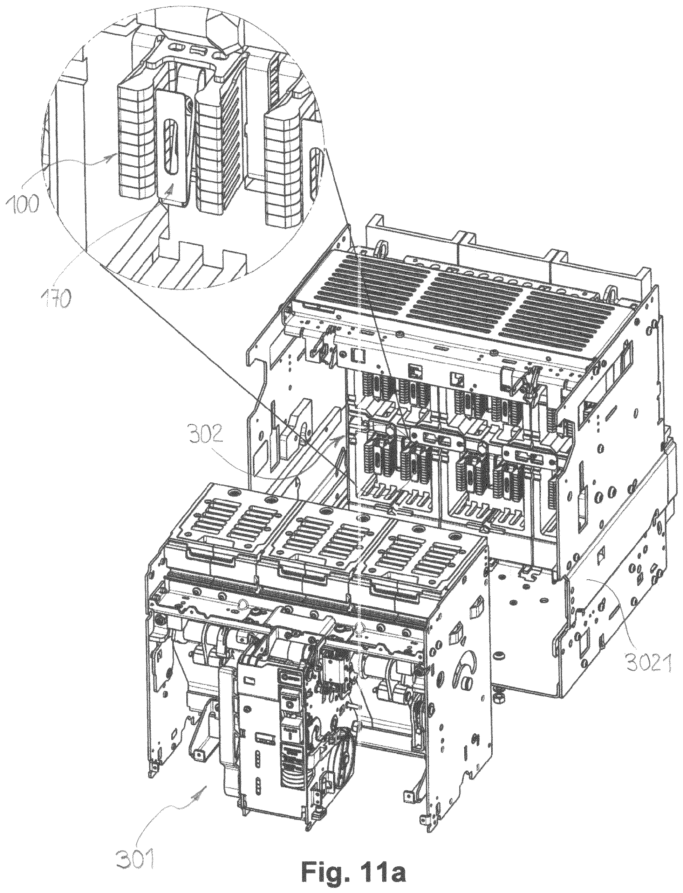

As shown in Figs 11a-b, a withdrawable low-voltage circuit breaker unit basically comprises a stationary base 302, which is fixed to a suitable supporting structure 3021, such as a case or a frame, and remains permanently electrically wired to a corresponding electrical circuit (not shown), and a withdrawable circuit breaker 301, which can be withdrawn from and mounted again onto the stationary base 302 whenever required, without the need of re-wiring each time the whole unit. The withdrawable circuit breaker 301 and the stationary base 302 are per se known and their specific configuration is not relevant for the present invention, therefore they are not described in more detail herein.

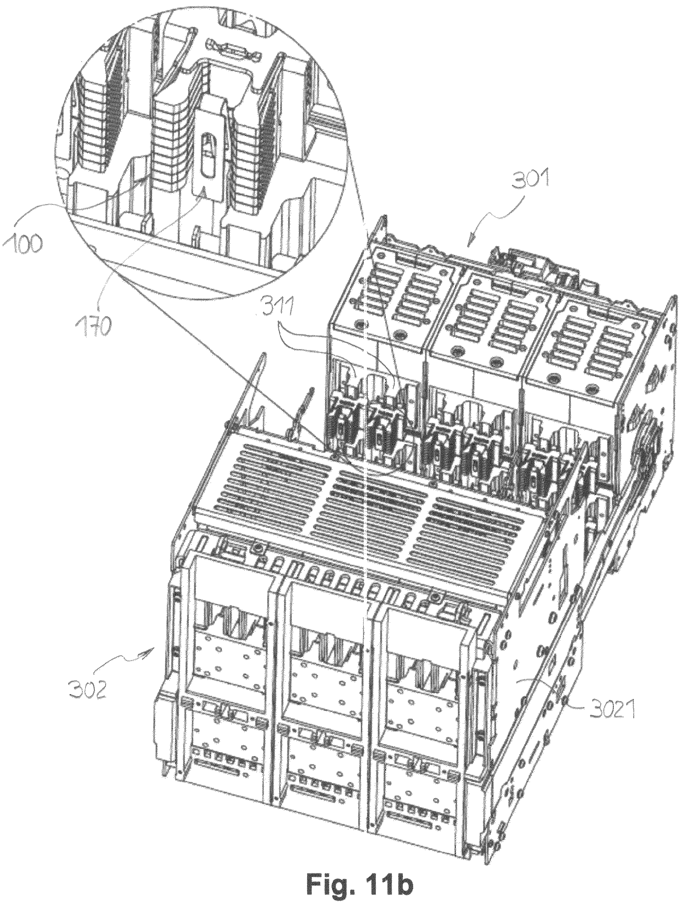

The withdrawable circuit breaker 301 comprises one or more electrical terminals 311, in the following also referred to as withdrawable electrical terminals 311, which are only partially visible in Fig. 11b. Correspondingly, the stationary base 302 comprises one or more electrical terminals 312, in the following also referred to as stationary electrical terminals 312, which are neither visible in Fig. 11a, being in this case covered by respective slide-in clamping devices of the invention, nor in Fig. 11b, because of the point of view of the figure. When the withdrawable low-voltage circuit breaker unit is assembled, i.e., the withdrawable circuit breaker 301 is connected to the stationary base 302, each electrical terminal 311 of the withdrawable circuit breaker 301 is mechanically and electrically connected with a corresponding electrical terminal 312 of the stationary base 302 by means of a respective slide-in clamping device according to the invention.

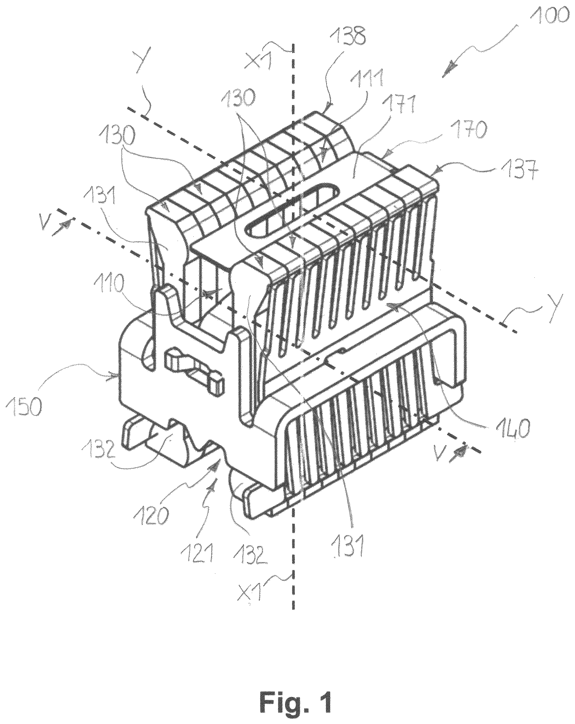

A first preferred embodiment of such a slide-in clamping device is shown in Figs 1-6 and is generally indicated at 100.

The slide-in clamping device 100 comprises a first clamping seat 110 for receiving one of said withdrawable electrical terminals 311, or, respectively, of said stationary electrical terminals 312, and a second clamping seat 120 for receiving a corresponding one of said stationary electrical terminals 312 or, respectively, of said withdrawable electrical terminals 311.

The electrical terminals 311, 312 can be inserted into the respective clamping seat 110 or 120 through respective slide-in openings 111, 112 facing oppositely to each other. The clamping seats 110, 120 have respective slide-in directions which preferably coincide with each other, defining a common slide-in axis X1-X1 of the clamping device 100.

As apparent from Fig. 1, the clamping seats 110, 120 are at least partially laterally delimited by a plurality of pairs of clamping members 130 arranged in two rows 137, 138 facing each other and extending parallel to a longitudinal midplane of the clamping device 100 containing the slide-in axis X1-X1. More precisely, each clamping member 130 comprises a first longitudinal end portion defining a clamping finger 131 of the first clamping seat 110, and a second longitudinal end portion defining a clamping finger 132 of the second clamping seat 120. Therefore, the first clamping seat 110 is at least partially laterally delimited by pairs of respective clamping fingers 131 arranged in two rows facing each other and parallel to each other, coinciding with the rows 137, 138 of clamping members 130. Similarly, the second clamping seat 120 is at least partially laterally delimited by pairs of respective clamping fingers 132 arranged in two rows facing each other and parallel to each other, also coinciding with the rows 137, 138 of clamping members 130.

As a result, in this preferred embodiment of the slide-in clamping device according the invention, the clamping seats 110 and 120 have a straight, substantially parallelepiped configuration, open at the respective longitudinal ends and at the respective slide-in openings 111, 112. This configuration is particularly suitable for connecting bar-like electrical terminals 311, 312, such as for example busbars, having a square or rectangular cross section, wherein the rows of clamping fingers 131, 132 respectively of the first clamping seat 110 and of the second clamping seat 120 act as straight clamping jaws on the respective electrical terminal 311 or 312.

Preferably, all of the clamping members 130 have a same configuration. In particular, each clamping member 130 is preferably integrally formed and is preferably configured as a substantially straight bar with generally rectangular or square cross section, whose size may vary along the longitudinal extension of the bar so as to provide the clamping member 130 with a longitudinally variable outer profile.

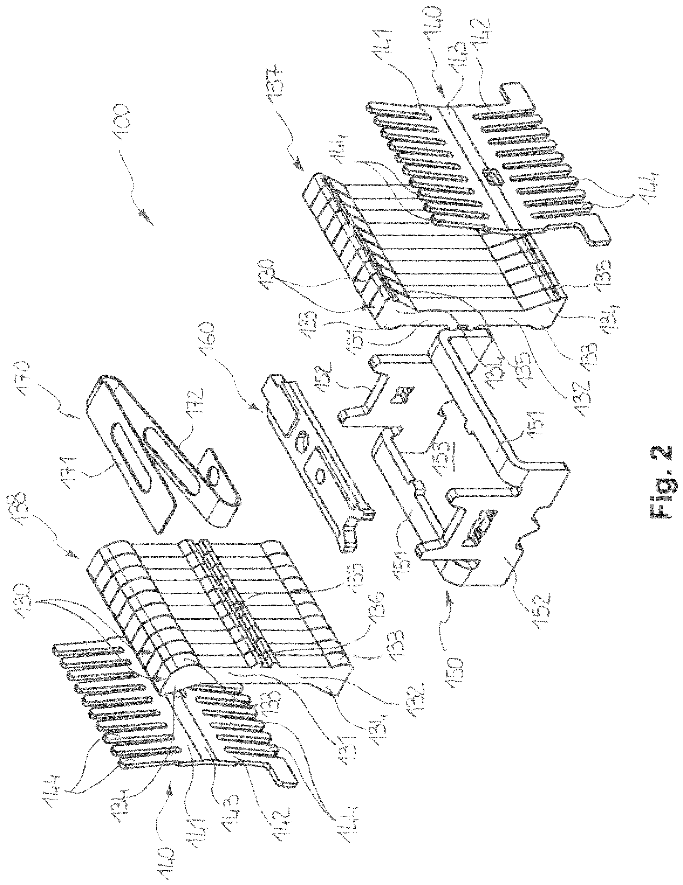

In particular, as better seen in Fig. 2, each clamping finger 131 of the first camping seat 110, i.e., each first end portion of the clamping members 130, and each clamping finger 132 of the second clamping seat 120, i.e., each second end portion of the clamping members 130, preferably comprise an inner contact protrusion 133 projecting inwardly in the first clamping seat 110 or, respectively, second clamping seat 120, at which the clamping finger 131 or 132 contacts an electrical terminal 311 or 312 inserted into the corresponding clamping seat 110 or 120. Here, the inner contact protrusions 133 may be conveniently configured as solid bulges integrally formed on an inwardly facing surface of the respective clamping finger 131 or 132. In any case, the inner contact protrusions 133 preferably have a round profile in the direction of longitudinal extension of the respective clamping finger 131 or 132, for facilitating the insertion and withdrawal of the electrical terminals 311, 312 into/from the respective clamping seat 110 or 120.

Each clamping finger 131 of the first clamping seat 110 and each clamping finger 132 of the second clamping seat 120 preferably also comprises an outer contact protrusion 134, projecting outwardly relative to the respective clamping seat 110 or 120, at which the clamping finger 131 or 132 is contacted by bias elastic means 140 of the clamping device 100, described in more detail below. The outer contact protrusions 134 may be conveniently configured as wedge-shaped portions integrally formed on an outwardly facing surface of the respective clamping finger 131 or 132, whose projecting height increases moving towards the tip of the respective clamping finger 131 or 132. The outer contact protrusions 134 preferably have a flat profile in the direction of longitudinal extension of the respective clamping finger 131 or 132, preferably terminating with an abutment notch 135 at the tip of the clamping finger 131 or 132.

Furthermore, each clamping member 130 preferably comprises a transverse groove 136 formed in or defined on a surface thereof facing inwardly with reference to the operating arrangement of the clamping member 130 in the clamping device 100. When the clamping members 130 are arranged mutually side-by-side in the two rows 137, 138, the respective transverse grooves 136 overall define two straight longitudinal rails 139, facing each other, for guiding the insertion of and retaining a fixed spacer member 160 of the clamping device 100, described in more detail below. Only one of said rails 139 is visible in Fig. 2.

As the clamping fingers 131, 132, i.e., the clamping members 130, shall also ensure electrical connection between the clamping seats 110, 120, and thus between the electrical terminals 311, 312 inserted therein, they are made of a material, in particular a metal or metal alloy, having good electrical conductivity, such as for example copper, silver, aluminum, or special metal alloys.

The clamping device 100 further comprises bias elastic means which provide the required clamping force at the clamping seats 110, 120, by urging opposite clamping fingers 131 or 132, i.e., corresponding longitudinal end portions of respective clamping members 130, of the rows 137, 138 towards each other in a clamping direction which is perpendicular to the slide-in axis X1-X1 of the clamping seats 110, 120 and to the rows 137, 138, and thus coincides with a transverse axis Y-Y of the clamping device 100.

In the preferred embodiment shown in Figs. 1-6, the bias elastic means of the clamping device 100 comprise a pair of leaf springs 140, each acting on a respective row 137 or 138 of clamping members 130, at the longitudinal end portions thereof.

As better seen in Fig. 2, both leaf springs 140 have a same configuration, comprising two opposite contact portions 141, 142, which contact the rows 137, 138 of clamping members 130, and a central connecting portion 143, which connects the contact portions 141, 142. The contact portions 141, 142 preferably have a comb-like structure comprising a plurality of prongs 144 corresponding to the plurality clamping members 130 of each row 137, 138 of clamping members 130. Each prong 144 of the contact portion 141 or, respectively, 142 independently contacts the first or, respectively, the second longitudinal end portion of a clamping member 130, at the respective outer contact protrusion 134 described above.

The rows 137, 138 of clamping members 130 and the leaf springs 140 described above are removably received in a mounting frame 150 of the clamping device 100, which helps maintaining the correct mutual position of such components for a proper operation of the clamping device 100.

As better seen still in Fig. 2, the mounting frame 150 preferably has a generally rectangular form comprising two long sides formed by respective longitudinal bars 151 and two short sides formed by respective transverse walls 142, which together delimit a rectangular central opening 153.

In an assembled condition of the clamping device (Fig. 1), each row 137, 138 of clamping members 130 together with the respective leaf spring 140 is arranged along one of the longitudinal bars 151, with the leaf spring 140 abutting, at its central connecting portion 143, against it. The clamping fingers 130 of the corresponding row 137 or 138 abut, at a longitudinal central portion thereof, against the central connecting portion 143 of the leaf spring 140 and are contacted, i.e., elastically biased, at the respective longitudinal end portions, by prongs 144 of the contact portions 141, 142 of the leaf spring 140.

For maintaining the two rows 137, 138 of clamping members 130 so arranged in the mounting frame 150 at a predetermined distance from each other against the biasing action of the leaf springs 140, a fixed spacer member 160 is interposed between them. The fixed spacer member 160 is preferably configured as a plate having a generally rectangular shape, whose long sides, in the assembled condition of the clamping device 100, are received in the two opposite rails 139 extending along the rows 137, 138 of contact members 130.

According to a relevant aspect of the present invention, the slide-in clamping device 100 comprises a displaceable spacer assembly 170 to selectively apply to the clamping fingers 131 or 132 of one of the clamping seats 110, 120 of the slide-in clamping device 100 a force which counteracts the clamping force generated by the bias elastic means, here the pair of leaf springs 140, acting on the same clamping fingers 131 or 132, for facilitating the insertion into the clamping seats 110, 120 of the respective electrical terminal 311 or 312.

In use, one of the clamping seats 110, 120 typically remains always clamped to an electrical terminal 311 or 312 of the withdrawable circuit breaker 301 or, respectively, of the stationary base 302, whereas the other of the clamping seats 110, 120 is engaged or disengaged by a corresponding electrical terminal 312 or 311 of the stationary base 302, or, respectively, of the withdrawable circuit breaker 301 every time the withdrawable circuit breaker 301 has to be mounted onto or withdrawn from the stationary base 302. The displaceable spacer assembly 170 is most conveniently used in combination with the clamping seat 110, 120 which is more often subjected to insertion and withdrawal actions of a respective electrical terminal 311 or 312, in the example shown in Figs. 1-6 the clamping seat 110. However, the use of a displaceable spacer assembly having the same structural and functional features of the displaceable spacer assembly 170 described hereinafter can be considered also in combination with the respectively other clamping seat 110 or 120, here the clamping seat 120, is not excluded.

The displaceable spacer assembly 170 comprises a displaceable spacer member 171 and associated bias elastic means.

The displaceable spacer member 171 is preferably configured as a plate of rectangular shape.

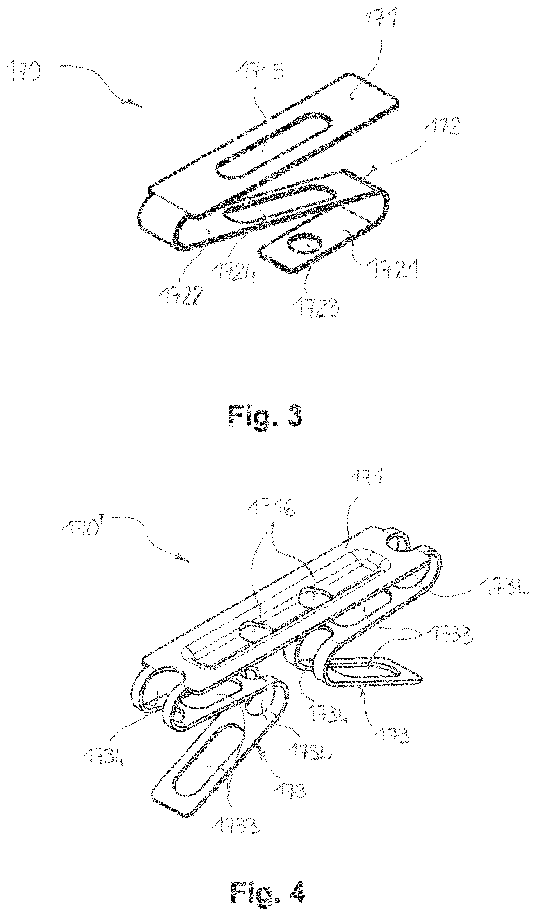

According to a preferred embodiment of the displaceable spacer assembly 170, shown in Figs. 1, 2, 5a-b, and also separately in Fig. 3, the bias elastic means of the displaceable spacer assembly 170 comprise a V-shaped cantilever spring 172. The cantilever spring 172 is fixedly connected to, preferably integrally formed with, the plate forming the displaceable spacer member 171, at a short side thereof. The cantilever spring 172 comprises a first leg 1721, intended to abut against a suitable abutment surface within the clamping device 100, as better explained below, and a second leg 1722, which is connected to the displaceable spacer member 171.

The first leg 1721 may comprise a through opening 1723 for a fastening means, such as a screw (not shown), for removably connecting the cantilever spring 172, i.e., the displaceable spacer assembly 170, to the said abutment surface. Correspondingly, also the second leg 1722 and the displaceable spacer member 171 may comprise a respective through opening 1724, 1715. The through openings 1723, 1724, 1715 at least partially cover each other, so as to allow the insertion therethrough of a suitable applicator tool, such as a screwdriver, for applying and removing said fasting means when the displaceable spacer assembly 170 is positioned in the clamping device 100. The through openings 1724 and 1715 may advantageously be configured as slots with an elongated shape, for facilitating maneuvering the applicator tool when applying or removing said fastening means, as well as for lightening purposes.

According to another preferred embodiment of the displaceable spacer assembly, shown separately in Fig. 4 and indicated generally with reference numeral 170', the displaceable spacer assembly bias elastic means comprise two V-shaped cantilever springs 173. The cantilever springs 173 are fixedly connected to, preferably integrally formed with, the plate forming the displaceable spacer member 171, at the short sides thereof, with a mutually symmetrical arrangement. The cantilever springs 173 preferably have a same configuration, comprising a first leg 1731, intended to abut against a suitable abutment surface within the clamping device 100, and a second leg 1732, which is connected to the displaceable spacer member 171.

Each cantilever spring 173 may comprise first through openings 1733 formed in the legs 1731, 1732, and second through openings 1734 formed at bend sections respectively connecting the two legs 1731, 1732 to each other and the cantilever spring 173 to the displaceable spacer member 171. Both the first through openings 1733 and the second through openings 1734 may be advantageously configured as slots with an elongated shape. The first through openings 1733 have mainly a lightening function, whereas by properly choosing the length and width of the second through openings 1734 it is possible to adjust the elastic response of the corresponding cantilever spring 173. One or more through openings 1716 my also be provided in the displaceable spacer member 171, for facilitating the extraction of the displaceable spacer assembly from the respective clamping seat 110 or 120 of the clamping device, and/or for lightening purposes.

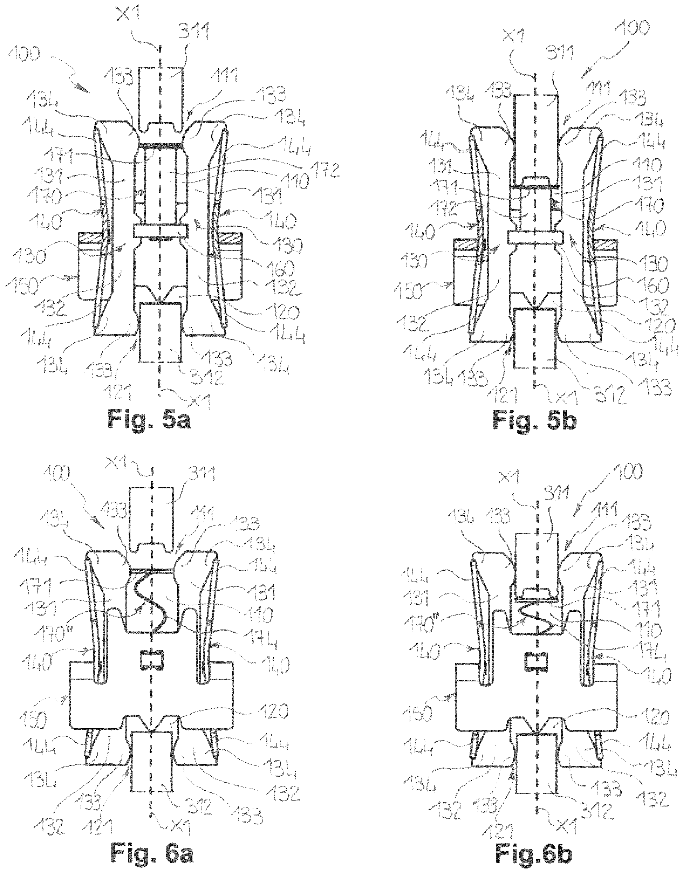

According to a further preferred embodiment of the displaceable spacer assembly, shown in Figs. 6a-b and indicated generally with reference numeral 170", the displaceable spacer assembly bias elastic means comprise a compression coil spring 174. At one end thereof, the compression coil spring 174 is connected to one of the faces of the displaceable spacer member 171, whereas the other end the compression coil spring 174 abuts against a suitable abutment surface within the clamping device 100.

All of the above-described embodiments of the displaceable spacer assembly 170, 170', and 170" operate in the same way within the clamping device 100, as explained in more detail hereinafter with reference in particular to Figs. 5a-b and 6a-b.

As apparent from Figs. 5a-b and 6a-b, as well as from Fig. 1, the displaceable spacer assembly 170 or 170" is fully received, preferably removably, in the clamping seat 110. The bias elastic means 172 or 174 abut with their free end against the fixed spacer member 160. When the clamping device 100 does not comprise a fixed spacer member, the bias elastic means may abut against portions of the mounting frame 150 of the clamping device 100 or also against an electrical terminal received in the other, opposite, clamping seat 120 of the clamping device 100.

The displaceable spacer member 171 is displaceable within the clamping seat 110, along the slide-in axis X1-X1, between an active position, shown in Figs. 1, 5a, and 6a, and an inactive position, shown in Figs. 5b and 6b.

In the active position, the displaceable spacer member 171, under the action of the respective bias elastic means 172 (Fig. 5a-b) or 174 (Figs. 6a-b), contacts the two opposite rows 137, 138 of clamping fingers 131 of the clamping seat 110, i.e., of corresponding first longitudinal end portions of the clamping members 130 of the clamping device 100, urging them away from each other in the clamping direction, i.e., along the transverse axis Y-Y. In this position, therefore, the displaceable spacer member 171 spreads the rows 137, 138 of clamping fingers 131 apart from each other to a certain predetermined extent against the opposite biasing force generated by the leaf springs 140. This promotes the insertion of the electrical terminal 311 into the clamping seat 110, reducing the insertion force required for this purpose.

By properly choosing the size of the displaceable spacer member 171 and setting the elastic response of the displaceable spacer assembly bias elastic means 172 or 174, it is possible to selectively set a predetermined spreading degree for the rows 137, 138 of clamping fingers 131 subjected to the biasing force generated by the leaf springs 140, or by other bias elastic means of the clamping device 100, and thus a corresponding predetermined extent to which the force for inserting an electrical terminal into the clamping seat 110 is reduced.

When the displaceable spacer member 171 is in the active position described above, the clamping seat 110 is in a rest condition, ready for receiving a corresponding electrical terminal. In this condition, the displaceable spacer member 171 autonomously remains in its active position under the sole action of the bias elastic means 172 or 174 of the displaceable spacer assembly 170. Moreover, in this condition the displaceable spacer member 171 is retained within the clamping seat 110 only by means of the respective clamping fingers 131, namely by the respective inner contact protrusions 133.

Upon insertion of an electrical terminal, here the electrical terminal 311, into the clamping seat 131, the displaceable spacer member 171 of the displaceable spacer assembly 170 or 170" is displaced towards its inactive position by the same electrical terminal 311, while the bias elastic means 172 or 174 are compressed.

When the electrical terminal 311 is fully inserted in the lamping seat 110, the displaceable spacer member 171 reaches its inactive position. In this position, the displaceable spacer member 171 does not apply any significant force to the rows 137, 138 of clamping fingers 131. Preferably, in this position, the displaceable spacer member 171 does not contact the rows 137, 138. Therefore, when the displaceable spacer member 171 is in this position, the clamping fingers 131 may fully develop their clamping action under the biasing force of the leaf springs 140, for a secure and tight clamping connection with the electrical terminal 311. This condition represents the operating condition of the clamping seat 110.

When the electrical terminal 311 is withdrawn from the clamping seat 110, the displaceable spacer member 171 autonomously returns to its active position under the sole action of the bias elastic means 172 or 174 and, correspondingly, the clamping seat 110 returns in its rest condition.

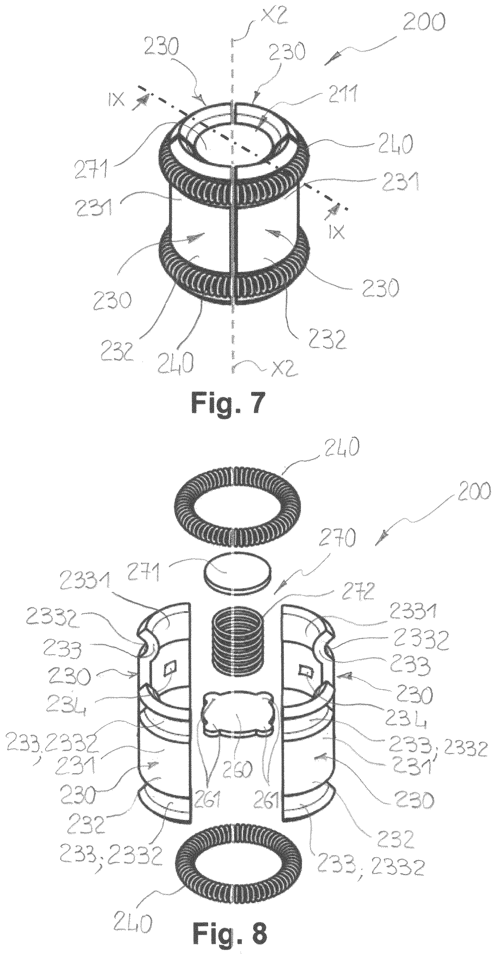

Figs. 7-9 show a second preferred embodiment of a slide-in clamping device according to the invention, generally indicated at 200.

As in the first embodiment described above, the slide-in clamping device 200 comprises a first clamping seat 210 for receiving one of the withdrawable electrical terminals 311, or, respectively, of the stationary electrical terminals 312 of the withdrawable low-voltage circuit breaker unit, and a second clamping seat 220 for receiving a corresponding one of said stationary electrical terminals 312 or, respectively, of said withdrawable electrical terminals 312. The clamping seats 210, 220 have respective slide-in openings 211, 221 facing oppositely to each other and respective slide-in directions which preferably coincide with each other, and with a longitudinal axis X2-X2 of the clamping device 200.

As apparent in particular from Fig. 7, the clamping seats 210, 220 are laterally delimited by two pairs of clamping members 230 facing each other and circumferentially arranged about the longitudinal axis X2-X2.

Each clamping member 230 comprises a first longitudinal end portion defining a clamping finger 231 of the first clamping seat 210, and a second longitudinal end portion defining a clamping finger 232 of the second clamping seat 220. Therefore, the first clamping seat 210 is laterally delimited by pairs of circumferentially arranged respective clamping fingers 231. Similarly, the second clamping seat 220 is laterally delimited by pairs of circumferentially arranged respective clamping fingers 232. As a result, in this preferred embodiment of the slide-in clamping device according the invention, each clamping seats 210, 220 has a substantially cylindrical, or tulip-like, configuration, open at the respective slide-in opening 211 or 212. This configuration is particularly suitable for connecting finger-like electrical terminals 311, 312 having a round cross section.

Preferably, all of the clamping members 230 have a same configuration. In particular, each clamping member 230 is preferably integrally formed and is preferably configured as a rectangular plate which is substantially straight in a first extension direction thereof, intended to lie parallel to the longitudinal axis X2-X2 of the clamping device 200 in the assembled condition, and curved in a second extension direction, intended to lie in a circumferential direction of the clamping device 200 in the assembled condition.

As better seen in Fig. 8, each clamping finger 231 of the first camping seat 210, i.e., each first end portion of the clamping members 230, and each clamping finger 232 of the second clamping seat 220, i.e., each second end portion of the clamping members 230, preferably comprise a groove 233 extending in said second extension direction of the respective clamping member 230, i.e., circumferentially in the assembled state of the clamping device 200. Each groove 233 has a convex side projecting inwardly in the first clamping seat 110 or, respectively, second clamping seat 120, which defines an inner contact protrusion 2331 at which the clamping finger 131 or 132 contacts an electrical terminal 311 or 312 inserted into the corresponding clamping seat 110 or 120. The inner contact protrusion 2331 preferably has a round profile in said first extension direction of the respective clamping member 230; i.e., longitudinally in the assembled state of the clamping device 200. Each groove 233 also has a concave side, recessed relative to an outer surface of the respective clamping member 230, which conveniently defines a seat 2332 for bias elastic means 240 of the clamping device 200, described in more detail below.

As in the first embodiment of the clamping device described above, the clamping fingers 231, 232, i.e., the clamping members 230, are made of a material, in particular a metal or metal alloy, having good electrical conductivity, such as for example copper, for ensuring electrical connection between the clamping seats 210, 220, and thus between the electrical terminals 311, 312 inserted therein.

The clamping device 200 further comprises bias elastic means which provide the required clamping force at the clamping seats 210, 220, by urging the respective clamping fingers 231 or 232, i.e., the corresponding longitudinal end portions of the clamping members 230, towards each other in a radial direction perpendicular to the longitudinal axis X2-X2 of the clamping device 200. In the preferred embodiment shown in Figs. 7-9, the bias elastic means of the clamping device 200 comprise a pair of annular traction coil springs 240 received in the above-mentioned seats 2332 and circumferentially surrounding the clamping seats 210, 220. Although not strictly necessary in this embodiment, since the clamping members 230 may remain at a predetermined mutual distance also under the biasing action of the traction coil springs 240 by circumferentially abutting against each other, also in this case a fixed spaced member 260 may be conveniently interposed between the clamping members 230 for improving the overall assembly of the clamping device 200. The fixed spacer member 260 is preferably configured as a plate having a circular shape. Alternatively, the fixed spacer member 260 could be configured as a circular ring (not shown). Preferably, the fixed spacer member 260 comprises peripheral projections 261 intended to engage corresponding recesses or through openings 234 formed in the clamping members 230. Preferably, the number of projections 261 is the same as the number of clamping members 230 in the clamping device 200.

In this case, as a result of the cylindrical symmetry and of the features described above, the clamping device 200 maintains its assembled condition in a dynamic way, under the sole action of the annular traction coil springs 240 and of the fixed spacer member 260, without the aid of an additional mounting frame.

According to the invention, the slide-in clamping device 200 also comprises a displaceable spacer assembly 270 to selectively apply to the clamping fingers 231 or 232 of one of the clamping seats 210, 220 of the slide-in clamping device 200 a force which counteracts the clamping force generated by the bias elastic means, here the annular traction coil springs 240, acting on the same clamping fingers 231 or 1232, for facilitating the insertion into the clamping seats 210, 220 of a respective electrical terminal 311 or 312. In particular, in the example shown in Figs. 7-9 the displaceable spacer assembly 270 is received, preferably removably, in the clamping seat 210 and acts on the corresponding clamping fingers 231. The displaceable spacer assembly 270 comprises a displaceable spacer member 271 and associated bias elastic means. The displaceable spacer member 271 is preferably configured as a plate having a circular shape. In view of the cylindrical base geometry of the clamping device 200, the bias elastic means of the displaceable spacer assembly 270 are preferably configured as a compression coil spring 272. At one end thereof, the compression coil spring 272 is connected to one of the faces of the displaceable spacer member 271, whereas the other end the coil compression spring 272 abuts against the fixed spacer member 260. When the fixed spacer member 260 is formed as circular ring, the compression coil spring 272 may extend through the fixed spacer member 260 and abut against an electrical terminal received in the other, opposite, clamping seat 220 of the clamping device 200.

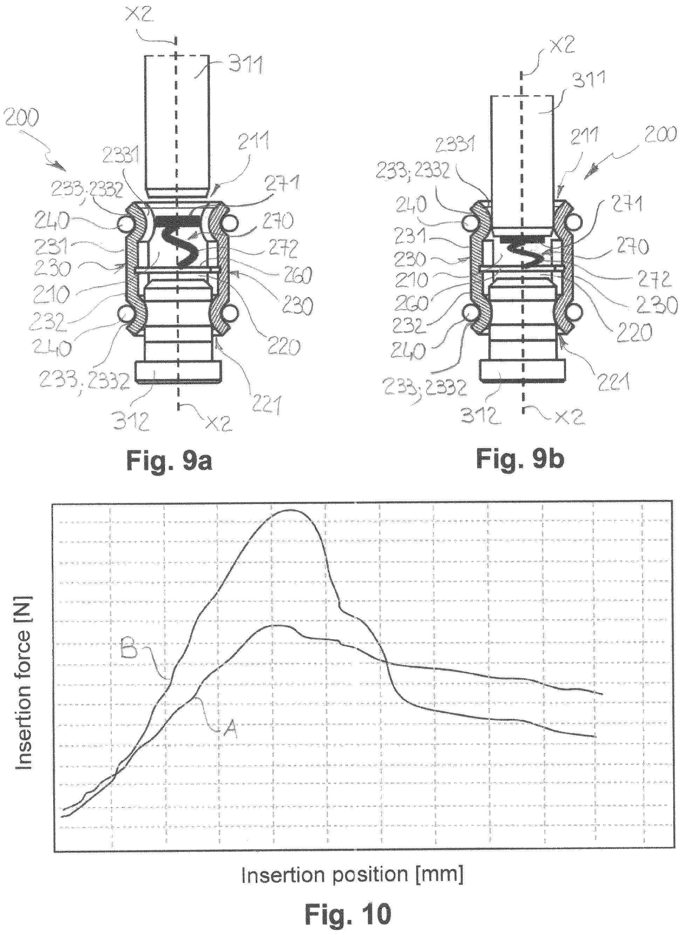

The operation principle of the displaceable spacer assembly 270 is shown in Figs. 9a-b and it is similar to the operation principle of the displaceable spacer assembly 170 in the clamping device 100, already described above with reference to the first preferred embodiment of the invention, therefore it will be not explained again in detail here.

Fig. 10 qualitatively shows the behavior of the insertion force as a function of the insertion position during the insertion of an electrical terminal into a clamping seat of a clamping device with a "jaw" configuration, similar to that shown in Figs. 1-6. Curve A represents the behavior of the insertion force during the insertion of an electrical terminal into a clamping seat provided with a displaceable spacer assembly according to the invention, whereas curve B represents the behavior of the insertion force during the insertion of the same electrical terminal into the same clamping seat without a displaceable spacer assembly, as in clamping devices of the prior art. By comparing the two curves it is apparent that the use of a spacer assembly according to the invention brings about a reduction of the insertion force during the initial phase of the insertion, as well as a significant lowering of the peak value reached during the insertion process.

The present invention thus provides a simple, effective, and economic technical solution for reducing the insertion force required for inserting an electrical terminal of a withdrawable low-voltage circuit breaker unit into a clamping seat of a slide-in clamping device used for mechanically and electrically connecting a pair of corresponding electrical terminals of such unit, which solution can be easily implemented both in new slide-in clamping devices and in existing clamping devices as a retrofit measure.

As it will be readily apparent to those skilled in the art, many modifications can be made to the embodiments of the clamping device according to the invention described in detail above, without departing from the scope of the invention as defined by the appended claims.

By way of example, in the first embodiment shown in Figs. 1-6 the clamping fingers 131 of the clamping seat 110 could be separately formed relative to the clamping fingers 132 of the clamping seat 120. The clamping fingers 131 and 132, separately or as part of corresponding integrally formed clamping members 130, could be differently secured in the mounting frame 150, for example pivotally by means of pins, and the fixed spacer member 160 could be omitted. The bias elastic means of the clamping device could be differently configured, for example as compression coil spring assemblies acting on each row of clamping fingers 131 or, respectively, 132 separately. In the embodiment shown in Figs. 7-9 a mounting frame could be provided for maintaining the clamping members 230 in the desired mutual position in the assembled state of the clamping device, and the clamping fingers 231 of the clamping seat 210 could be separately formed relative to the clamping fingers 232 of the clamping seat 220.

## Claims

1. Slide-in clamping device (100; 200) for removably connecting a first electrical terminal (311) of a withdrawable low-voltage circuit breaker (301) to a corresponding second electrical terminal (312) of a respective stationary base (302) in a withdrawable low-voltage circuit breaker unit, the clamping device (100; 200) comprising:
- at least one pair of first clamping fingers (131; 231) facing each other and at least partially laterally delimiting a first clamping seat (110; 210) for one of said first and second electrical terminals (311, 312), the first clamping seat (110; 210) comprising a respective slide-in opening (111; 211);
- at least one pair of second clamping fingers (132; 232) facing each other and at least partially laterally delimiting a second clamping seat (120; 220) for the other of said first and second electrical terminals (311, 312), the second clamping seat (120; 220) comprising a respective slide-in opening (121; 221) facing oppositely relative to the slide-in opening (111; 211) of the first clamping seat (110; 210), and
- bias elastic means (140; 240) acting on said at least one pair of first clamping fingers (131; 231) and said at least one pair of second clamping fingers (132; 232) so as to urge the clamping fingers (131, 132; 231, 232) of each pair towards each other in a clamping direction (Y-Y) substantially perpendicular to respective slide-in directions (X1-X1; X2-X2) of said first clamping seat (110; 210) and said second clamping seat (120; 220),
- -at least one displaceable spacer assembly (170, 170', 170"; 270) having a displaceable spacer member (171; 271), wherein the displaceable spacer member (171; 271) is displaceable between an active position, and an inactive position,
**characterized in that**:
in the active position, the displaceable spacer member (171, 271) contacts the first clamping fingers (131, 231) of the at least one pair of first clamping fingers or the second clamping fingers (132, 232) of the at least one pair of second clamping fingers urging them away from each other in the clamping direction (Y-Y),
in the inactive position, the displaceable spacer member (171; 271) does not apply any force to said first clamping fingers (131; 231) or said second clamping fingers (132; 232).

2. Clamping device (100; 200) according to claim 1, wherein the at least one displaceable spacer assembly (170, 170', 170"; 270) comprises displaceable spacer assembly bias elastic means (172, 173, 174; 272) urging the displaceable spacer member (171; 271) towards said active position.

3. Clamping device (100; 200) according to any one of the previous claims, wherein the at least one displaceable spacer assembly (170, 170', 170"; 270) is fully received, preferably removably, in said first clamping seat (110; 210) or in said second clamping seat (120; 220).

4. Clamping device (100; 200) according to any one of the previous claims, wherein the displaceable spacer member (171; 271) is displaceable along the slide-in direction (X1-X1; X2-X2) of said first clamping seat (110; 210) or said second clamping seat (120; 220).

5. Clamping device (100; 200) according to any one of the previous claims, wherein the displaceable spacer member (171; 271) is displaceable by said first electrical terminal (311) or said second electrical terminal (312) upon insertion thereof in the respective clamping seat (110, 120; 210, 220).

6. Clamping device (100; 200) according to any one of the previous claims, wherein, when said first electrical terminal (311) or said second electrical terminal (312) is fully inserted in the respective clamping seat (110, 120; 210, 220), the displaceable spacer member (171; 271) is in said inactive position.

7. Clamping device (100; 200) according to any one of the previous claims, wherein, when said first electrical terminal (311) or said second electrical terminal (312) is fully withdrawn from the respective clamping seat (110, 120; 210, 220)., the displaceable spacer member (171; 271) is in said active position.

8. Clamping device (100; 200) according to any one of the previous claims, wherein the displaceable spacer member (171; 271) is configured as a plate.

9. Clamping device (100; 200) according to any one of claims 2 to 8, wherein the displaceable spacer assembly bias elastic means (172, 173, 174; 272) are selected from the group consisting of cantilever springs, compression coil springs, and any combinations thereof.

10. Clamping device (100; 200) according to any one of the previous claims, wherein the slide-in directions (X1-X1; X2-X2) of the first clamping seat (110; 210) and of the second clamping seat (120; 220) substantially coincide with each other.

11. Clamping device (100; 200) according to any one of the previous claims, comprising at least one pair of integrally formed clamping members (130; 230) facing each other and at least partially laterally delimiting both the first clamping seat (110; 210) and the second clamping seat (120; 220), wherein the first clamping fingers (131; 231) of said at least one pair of first clamping fingers are defined by first longitudinal end portions of said clamping members (130; 230) and the second clamping fingers (132; 232) of said at least one pair of second clamping fingers are defined by second longitudinal end portions of said clamping members (130; 230).

12. Clamping device (100; 200) according to claim 11, comprising a fixed spacer member (160; 260) interposed between the clamping members (130; 230) of said at least one pair of clamping members for maintaining said clamping members (130; 230) at a predetermined distance from each other against the action of said bias elastic means (140; 240).

13. Clamping device (100) according to claim 11 or 12, comprising a plurality of pairs of clamping members (130) arranged in two rows (137, 138) facing each other and extending parallel to a longitudinal midplane of the clamping device (100) containing the slide-in directions (X1-X1) of said first clamping seat (110) and said second clamping seat (120).

14. Clamping device (100) according to claim 13, wherein the bias elastic means comprise a pair of leaf springs (140) each acting on one of said rows (137, 138) of clamping members (130) at the respective longitudinal end portions.

15. Clamping device (100) according to claim 14, wherein each of said leaf springs (140) comprises two opposite contact portions (141, 142) for contacting the respective row (137, 138) of clamping members (130) at the longitudinal end portions thereof, and a central connecting portion (143) which connects said contact portions (141, 142), and wherein each of said contact portions (141, 142) has a comb-like structure comprising a plurality of prongs (144) corresponding to the plurality of pairs of said clamping members (130).

16. Clamping device (200) according to claim 11 or 12, comprising at least one pair of clamping members (230) circumferentially arranged about a longitudinal axis defined by the slide-in directions (X2-X2) of said first clamping seat (210) and said second clamping seat (220).

17. Clamping device (200) according to claim 16, wherein the bias elastic means comprise a pair of compression rings (240) circumferentially surrounding the at least one pair of clamping members (230) at longitudinal end portions thereof.

18. Clamping device (200) according to claim 16 o 17, wherein said at least one pair of clamping members (230) are arranged in the clamping device (200) without the aid of a mounting frame.

19. Clamping device (100, 200) according to any one of claims 12 to 18, wherein the displaceable spacer assembly bias elastic means (172, 173, 174; 272), at a side thereof opposite to the displaceable spacer member (171, 271), abut against said fixed spaced member (160; 260).

20. Clamping device (100, 200) according to any one of the previous claims, wherein the displaceable spacer assembly bias elastic means (172, 173, 174; 272), at a side thereof opposite to the displaceable spacer member (171; 271), abut against one of said first and second electrical terminals (311, 312) received in the clamping seat (110, 120; 210, 220) other than the one where the displaceable spacer assembly (170, 170'. 170"; 270) acts.

21. Withdrawable low-voltage circuit breaker unit, comprising a withdrawable low-voltage circuit breaker (301) having at least one first electrical terminal (311), a stationary base (302) having at least one corresponding second electrical terminal (312), and a slide-in clamping device (100; 200) according to any one of the previous claims which removably connects said first and second electrical terminals (311, 312) to each other.

## Patentansprüche

1. Einschubspannvorrichtung (100; 200) zum lösbaren Verbinden eines ersten elektrischen Anschlusses (311) eines entnehmbaren Niederspannungsleistungsschalters (301) mit einem entsprechenden zweiten elektrischen Anschluss (312) einer jeweiligen stationären Basis (302) in einer entnehmbaren Niederspannungsleistungsschaltereinheit, wobei die Spannvorrichtung (100; 200) Folgendes umfasst:
- mindestens ein Paar erste Spannfinger (131; 231), die einander zugewandt sind und zumindest teilweise seitlich einen ersten Spannsitz (110; 210) für einen des ersten und zweiten elektrischen Anschlusses (311, 312) begrenzen, wobei der erste Spannsitz (110; 210) eine jeweilige Einschuböffnung (111; 211) umfasst;
- mindestens ein Paar zweite Spannfinger (132; 232), die einander zugewandt sind und zumindest teilweise seitlich einen zweiten Spannsitz (120; 220) für den anderen des ersten und zweiten elektrischen Anschlusses (311, 312) begrenzen, wobei der zweite Spannsitz (120; 220) eine jeweilige Einschuböffnung (121; 221) umfasst, die der Einschuböffnung (111; 211) des ersten Spannsitzes (110; 210) gegenüberliegt, und
- elastische Vorspannmittel (140 110; 240 210), die auf das mindestens eine Paar erste Spannfinger (131; 231) und das mindestens eine Paar zweite Spannfinger (132; 232) wirken, um die Spannfinger (131, 132; 231, 232) jedes Paars in einer Spannrichtung (Y-Y), die im Wesentlichen senkrecht zur jeweiligen Einschubrichtung (X1-X1; X2-X2) des ersten Spannsitzes (120) und des zweiten Spannsitzes (220) ist, aufeinander zu zu drücken,
- mindestens eine verschiebbare Abstandhalteranordnung (170, 170', 170"; 270) mit einem verschiebbaren Abstandhalterelement (171; 271), wobei das verschiebbare Abstandhalterelement (171; 271) zwischen einer aktiven Position und einer inaktiven Position verschiebbar ist,
**dadurch gekennzeichnet, dass**:
das verschiebbare Abstandhalterelement (171, 271) in der aktiven Position die ersten Spannfinger (131, 231) des mindestens einen Paars erste Spannfinger oder die zweiten Spannfinger (132, 232) des mindestens einen Paars zweite Spannfinger berührt und sie in Spannrichtung (Y-Y) voneinander weg drückt,
das verschiebbare Abstandhalterelement (171; 271) in der inaktiven Position keine Kraft auf die ersten Spannfinger (131; 231) oder die zweiten Spannfinger (132; 232) aufbringt.

2. Spannvorrichtung (100; 200) nach Anspruch 1, wobei die mindestens eine verschiebbare Abstandhalteranordnung (170, 170', 170"; 270) elastische Vorspannmittel (172, 173, 174; 272) der verschiebbaren Abstandhalteranordnung umfasst, die das verschiebbare Abstandhalterelement (171; 271) in Richtung der aktiven Position drücken.

3. Spannvorrichtung (100; 200) nach einem der vorhergehenden Ansprüche, wobei die mindestens eine verschiebbare Abstandhalteranordnung (170, 170', 170"; 270) vollständig, vorzugsweise lösbar, in dem ersten Spannsitz (110; 210) oder in dem zweiten Spannsitz (120; 220) aufgenommen ist.

4. Spannvorrichtung (100; 200) nach einem der vorhergehenden Ansprüche, wobei das verschiebbare Abstandhalterelement (171; 271) entlang der Einschubrichtung (X1-X1; X2-X2) des ersten Spannsitzes (110; 210) oder des zweiten Spannsitzes (120; 220) verschiebbar ist.

5. Spannvorrichtung (100; 200) nach einem der vorhergehenden Ansprüche, wobei das verschiebbare Abstandhalterelement (171; 271) durch den ersten elektrischen Anschluss (311) oder den zweiten elektrischen Anschluss (312) beim Einsetzen desselben in den jeweiligen Spannsitz (110, 120; 210, 220) verschiebbar ist.

6. Spannvorrichtung (100; 200) nach einem der vorhergehenden Ansprüche, wobei, wenn der erste elektrische Anschluss (311) oder der zweite elektrische Anschluss (312) vollständig in den jeweiligen Spannsitz (110, 120; 210, 220) eingesetzt ist, das verschiebbare Abstandhalterelement (171; 271) in der inaktiven Position ist.

7. Spannvorrichtung (100; 200) nach einem der vorhergehenden Ansprüche, wobei, wenn der erste elektrische Anschluss (311) oder der zweite elektrische Anschluss (312) vollständig aus dem jeweiligen Spannsitz (110, 120; 210, 220) herausgezogen ist, das verschiebbare Abstandhalterelement (171; 271) in der aktiven Position ist.

8. Spannvorrichtung (100; 200) nach einem der vorhergehenden Ansprüche, wobei das verschiebbare Abstandhalterelement (171; 271) als Platte ausgebildet ist.

9. Spannvorrichtung (100; 200) nach einem der Ansprüche 2 bis 8, wobei die elastischen Vorspannmittel (172, 173, 174; 272) der verschiebbaren Abstandhalteranordnung aus der Gruppe ausgewählt sind, die aus Auslegerfedern, Schraubendruckfedern und beliebigen Kombinationen davon besteht.

10. Spannvorrichtung (100; 200) nach einem der vorhergehenden Ansprüche, wobei die Einschubrichtung (X1-X1; X2-X2) des ersten Spannsitzes (110; 210) und des zweiten Spannsitzes (120; 220) im Wesentlichen miteinander zusammenfallen.

11. Spannvorrichtung (100; 200) nach einem der vorhergehenden Ansprüche, umfassend mindestens ein Paar integral ausgebildete Spannelemente (130; 230), die einander zugewandt sind und zumindest teilweise seitlich sowohl den ersten Spannsitz (110; 210) als auch den zweiten Spannsitz (120; 220) begrenzen, wobei die ersten Spannfinger (131; 231) des mindestens einen Paars erste Spannfinger durch erste Längsendabschnitte der Spannelemente (130; 230) definiert sind und die zweiten Spannfinger (132; 232) des mindestens einen Paars zweite Spannfinger durch zweite Längsendabschnitte der Spannelemente (130; 230) definiert sind.

12. Spannvorrichtung (100; 200) nach Anspruch 11, umfassend ein festes Abstandhalterelement (160; 260), das zwischen den Spannelementen (130; 230) des mindestens einen Paars Spannelemente angeordnet ist, um die Spannelemente (130; 230) gegen die Wirkung der elastischen Vorspannmittel (140; 240) in einem vorbestimmten Abstand voneinander zu halten.

13. Spannvorrichtung (100) nach Anspruch 11 oder 12, umfassend mehrere Paare Spannelemente (130), die in zwei einander zugewandten Reihen (137, 138) angeordnet sind und sich parallel zu einer Längsmittelebene der Spannvorrichtung (100) erstrecken, die die Einschubrichtung (X1-X1) des ersten Spannsitzes (110) und des zweiten Spannsitzes (120) enthält.

14. Spannvorrichtung (100) nach Anspruch 13, wobei die elastischen Vorspannmittel ein Paar Blattfedern (140) umfassen, die jeweils auf eine der Reihen (137, 138) von Spannelementen (130) an den jeweiligen Längsendabschnitten wirken.

15. Spannvorrichtung (100) nach Anspruch 14, wobei jede der Blattfedern (140) zwei gegenüberliegende Kontaktabschnitte (141, 142) zum Kontaktieren der jeweiligen Reihe (137, 138) von Spannelementen (130) an ihren Längsendabschnitten und einen zentralen Verbindungsabschnitt (143), der die Kontaktabschnitte (141, 142) verbindet, umfasst, und wobei jeder der Kontaktabschnitte (141, 142) eine kammartige Struktur aufweist, die mehrere Zinken (144) umfasst, die den mehreren Paaren Spannelemente (130) entsprechen.

16. Spannvorrichtung (200) nach Anspruch 11 oder 12, umfassend mindestens ein Paar Spannelemente (230), die umlaufend um eine durch die Einschubrichtung (X2-X2) des ersten Spannsitzes (210) und des zweiten Spannsitzes (220) definierte Längsachse angeordnet sind.

17. Spannvorrichtung (200) nach Anspruch 16, wobei die elastischen Vorspannmittel ein Paar Druckringe (240) umfassen, die das mindestens eine Paar Spannelemente (230) an deren Längsendabschnitten umlaufend umgeben.

18. Spannvorrichtung (200) nach Anspruch 16 oder 17, wobei das mindestens eine Paar Spannelemente (230) ohne Zuhilfenahme eines Montagerahmens in der Spannvorrichtung (200) angeordnet ist.

19. Spannvorrichtung (100, 200) nach einem der Ansprüche 12 bis 18, wobei die elastischen Vorspannmittel (172, 173, 174; 272) der verschiebbaren Abstandhalteranordnung an einer dem verschiebbaren Abstandhalterelement (171, 271) gegenüberliegenden Seite davon an dem festen Abstandhalterelement (160; 260) anliegen.

20. Spannvorrichtung (100, 200) nach einem der vorhergehenden Ansprüche, wobei die elastischen Vorspannmittel (172, 173, 174; 272) der verschiebbaren Abstandhalteranordnung an einer Seite davon, die dem verschiebbaren Abstandhalterelement (171; 271) gegenüberliegt, an einem des ersten und zweiten elektrischen Anschlusses (311, 312), der in dem Spannsitz (110, 120; 210, 220) aufgenommen ist, der nicht derjenige ist, auf den die verschiebbare Abstandhalterbaugruppe (170, 170'; 170"; 270) wirkt, anliegen.

21. Entnehmbare Niederspannungsleistungsschaltereinheit, umfassend einen entnehmbaren Niederspannungsleistungsschalter (301) mit mindestens einem ersten elektrischen Anschluss (311), eine stationäre Basis (302) mit mindestens einem entsprechenden zweiten elektrischen Anschluss (312) und eine Einschubspannvorrichtung (100; 200) nach einem der vorhergehenden Ansprüche, die den ersten und zweiten elektrischen Anschluss (311, 312) lösbar miteinander verbindet.

## Revendications

1. Dispositif de serrage à insertion par coulissement (100 ; 200) destiné à connecter de manière amovible une première borne électrique (311) d'un disjoncteur basse tension débrochable (301) à une deuxième borne électrique (312) correspondante d'un socle immobile (302) respectif dans une unité de disjoncteur basse tension débrochable, le dispositif de serrage (100 ; 200) comprenant :
- au moins une paire de premiers doigts de serrage (131 ; 231) se faisant face et délimitant latéralement au moins en partie un premier siège de serrage (110 ; 210) pour l'une desdites première et deuxième bornes électriques (311, 312), le premier siège de serrage (110 ; 210) comprenant une ouverture d'insertion par coulissement (111 ; 211) respective ;
- au moins une paire de deuxièmes doigts de serrage (132 ; 232) se faisant face et délimitant latéralement au moins en partie un deuxième siège de serrage (120 ; 220) pour l'autre desdites première et deuxième bornes électriques (311, 312), le deuxième siège de serrage (120 ; 220) comprenant une ouverture d'insertion par coulissement (121 ; 221) respective orientée à l'opposé de l'ouverture d'insertion par coulissement (111 ; 211) du premier siège de serrage (110 ; 210), et
- des moyens élastiques de sollicitation (140 ; 240) agissant sur ladite au moins une paire de premiers doigts de serrage (131 ; 231) et ladite au moins une paire de deuxièmes doigts de serrage (132 ; 232) de manière à pousser les doigts de serrage (131, 132 ; 231, 232) de chaque paire l'un vers l'autre selon une direction de serrage (Y-Y) sensiblement perpendiculaire aux directions d'insertion par coulissement (X1-X1 ; X2-X2) respectives dudit premier siège de serrage (110 ; 210) et dudit deuxième siège de serrage (120 ; 220),
- au moins un ensemble d'espacement déplaçable (170, 170', 170" ; 270) pourvu d'un élément d'espacement déplaçable (171 ; 271), l'élément d'espacement déplaçable (171 ; 271) étant déplaçable entre une position active et une position inactive,
**caractérisé en ce que** :
dans la position active, l'élément d'espacement déplaçable (171, 271) vient en contact avec les premiers doigts de serrage (131, 231) de l'au moins une paire de premiers doigts de serrage ou avec les deuxièmes doigts de serrage (132, 232) de l'au moins une paire de deuxièmes doigts de serrage en les poussant l'un à l'écart de l'autre selon la direction de serrage (Y-Y),
dans la position inactive, l'élément d'espacement déplaçable (171 ; 271) n'exerce aucune force sur lesdits premiers doigts de serrage (131 ; 231) ou lesdits deuxièmes doigts de serrage (132 ; 232).

2. Dispositif de serrage (100 ; 200) selon la revendication 1, dans lequel l'au moins un ensemble d'espacement déplaçable (170, 170', 170" ; 270) comprend des moyens élastiques de sollicitation d'ensemble d'espacement déplaçable (172, 173, 174 ; 272) poussant l'élément d'espacement déplaçable (171 ; 271) vers ladite position active.

3. Dispositif de serrage (100 ; 200) selon l'une quelconque des revendications précédentes, dans lequel l'au moins un ensemble d'espacement déplaçable (170, 170', 170" ; 270) est entièrement reçu, de préférence de manière amovible, dans ledit premier siège de serrage (110 ; 210) ou dans ledit deuxième siège de serrage (120 ; 220).

4. Dispositif de serrage (100 ; 200) selon l'une quelconque des revendications précédentes, dans lequel l'élément d'espacement déplaçable (171 ; 271) est déplaçable le long de la direction d'insertion par coulissement (X1-X1 ; X2-X2) dudit premier siège de serrage (110 ; 210) ou dudit deuxième siège de serrage (120 ; 220).

5. Dispositif de serrage (100 ; 200) selon l'une quelconque des revendications précédentes, dans lequel l'élément d'espacement déplaçable (171 ; 271) est déplaçable par ladite première borne électrique (311) ou ladite deuxième borne électrique (312) lors de son insertion dans le siège de serrage (110, 120 ; 210, 220) respectif.

6. Dispositif de serrage (100 ; 200) selon l'une quelconque des revendications précédentes, dans lequel, lorsque ladite première borne électrique (311) ou ladite deuxième borne électrique (312) est entièrement insérée dans le siège de serrage (110, 120 ; 210, 220) respectif, l'élément d'espacement déplaçable (171 ; 271) est dans ladite position inactive.

7. Dispositif de serrage (100 ; 200) selon l'une quelconque des revendications précédentes, dans lequel, lorsque ladite première borne électrique (311) ou ladite deuxième borne électrique (312) est entièrement retirée du siège de serrage (110, 120 ; 210, 220) respectif, l'élément d'espacement déplaçable (171 ; 271) est dans ladite position active.

8. Dispositif de serrage (100 ; 200) selon l'une quelconque des revendications précédentes, dans lequel l'élément d'espacement déplaçable (171 ; 271) est configuré sous la forme d'une plaque.

9. Dispositif de serrage (100 ; 200) selon l'une quelconque des revendications 2 à 8, dans lequel les moyens élastiques de sollicitation d'ensemble d'espacement déplaçable (172, 173, 174 ; 272) sont sélectionnés dans le groupe comprenant des ressorts en porte-à-faux, des ressorts hélicoïdaux de compression, et toute combinaison de ceux-ci.

10. Dispositif de serrage (100 ; 200) selon l'une quelconque des revendications précédentes, dans lequel les directions d'insertion par coulissement (X1-X1 ; X2-X2) du premier siège de serrage (110 ; 210) et du deuxième siège de serrage (120 ; 220) coïncident sensiblement entre elles.

11. Dispositif de serrage (100 ; 200) selon l'une quelconque des revendications précédentes, comprenant au moins une paire d'éléments de serrage formés d'un seul tenant (130 ; 230) se faisant face et délimitant latéralement au moins en partie à la fois le premier siège de serrage (110 ; 210) et le deuxième siège de serrage (120 ; 220), les premiers doigts de serrage (131 ; 231) de ladite au moins une paire de premiers doigts de serrage étant définis par des premières portions d'extrémité longitudinales desdits éléments de serrage (130 ; 230), et les deuxièmes doigts de serrage (132 ; 232) de ladite au moins une paire de deuxièmes doigts de serrage étant définis par des deuxièmes portions d'extrémité longitudinales desdits éléments de serrage (130 ; 230).

12. Dispositif de serrage (100 ; 200) selon la revendication 11, comprenant un élément d'espacement fixe (160 ; 260) interposé entre les éléments de serrage (130 ; 230) de ladite au moins une paire d'éléments de serrage afin de maintenir lesdits éléments de serrage (130 ; 230) à une distance prédéterminée l'un de l'autre contre l'action desdits moyens élastiques de sollicitation (140 ; 240).

13. Dispositif de serrage (100) selon la revendication 11 ou 12, comprenant une pluralité de paires d'éléments de serrage (130) agencés en deux rangées (137, 138) se faisant face et s'étendant parallèlement à un plan longitudinal médian du dispositif de serrage (100) contenant les directions d'insertion par coulissement (X1-X1) dudit premier siège de serrage (110) et dudit deuxième siège de serrage (120).

14. Dispositif de serrage (100) selon la revendication 13, dans lequel les moyens élastiques de sollicitation comprennent une paire de ressorts à lame (140) agissant chacun sur l'une desdites rangées (137, 138) d'éléments de serrage (130) au niveau des portions d'extrémité longitudinales respectives.

15. Dispositif de serrage (100) selon la revendication 14, dans lequel chacun desdits ressorts à lame (140) comprend deux portions de contact (141, 142) opposées destinées à venir en contact avec la rangée (137, 138) respective d'éléments de serrage (130) au niveau de leurs portions d'extrémité longitudinales, et une portion de liaison centrale (143) qui relie lesdites portions de contact (141, 142), et dans lequel chacune desdites portions de contact (141, 142) est pourvue d'une structure en peigne comprenant une pluralité de dents (144) correspondant à la pluralité de paires desdits éléments de serrage (130).

16. Dispositif de serrage (200) selon la revendication 11 ou 12, comprenant au moins une paire d'éléments de serrage (230) agencés circonférentiellement autour d'un axe longitudinal défini par les directions d'insertion par coulissement (X2-X2) dudit premier siège de serrage (210) et dudit deuxième siège de serrage (220).

17. Dispositif de serrage (200) selon la revendication 16, dans lequel les moyens élastiques de sollicitation comprennent une paire de bagues de compression (240) entourant circonférentiellement l'au moins une paire d'éléments de serrage (230) au niveau de leurs portions d'extrémité longitudinales.

18. Dispositif de serrage (200) selon la revendication 16 ou 17, dans lequel ladite au moins une paire d'éléments de serrage (230) est agencée dans le dispositif de serrage (200) sans l'aide d'un cadre de montage.

19. Dispositif de serrage (100, 200) selon l'une quelconque des revendications 12 à 18, dans lequel les moyens élastiques de sollicitation d'ensemble d'espacement déplaçable (172, 173, 174 ; 272), de leur côté opposé à l'élément d'espacement déplaçable (171, 271), viennent en butée contre ledit élément d'espacement fixe (160 ; 260).

20. Dispositif de serrage (100, 200) selon l'une quelconque des revendications précédentes, dans lequel les moyens élastiques de sollicitation d'ensemble d'espacement déplaçable (172, 173, 174 ; 272), de leur côté opposé à l'élément d'espacement déplaçable (171 ; 271), viennent en butée contre l'une desdites première et deuxième bornes électriques (311, 312) reçues dans le siège de serrage (110, 120 ; 210, 220) autre que celle sur laquelle agit l'ensemble d'espacement déplaçable (170, 170', 170 " ; 270).

21. Unité de disjoncteur basse tension débrochable, comprenant un disjoncteur basse tension débrochable (301) pourvu d'au moins une première borne électrique (311), d'un socle immobile (302) pourvu d'au moins une deuxième borne électrique (312) correspondante, et d'un dispositif de serrage à insertion par coulissement (100 ; 200) selon l'une quelconque des revendications précédentes qui relie de manière amovible lesdites première et deuxième bornes électriques (311, 312) entre elles.
